# EUROPEAN PATENT APPLICATION

(11) **EP 1 892 138 A1**
(43) Date of publication of application: **27.02.2008**
(21) Application number: 06755383.4
(22) Date of filing: 23.05.2006
(51) Int. Cl.: B60K 17/04, F16H 7/14

(54) **ELECTROMECHANICAL DRIVE MECHANISM FOR MOTOR VEHICLES WITH COMBUSTION ENGINES**

(30) Priority: 03.06.2005 ES 200501344
(71) Applicant: Bernedo Toran, Manuel, 28760 Madrid (ES)
(72) Inventor: Bernedo Toran, Manuel, 28760 Madrid (ES)
(74) Representative: Urizar Anasagasti, Jesus Maria
(86) International application number: PCT/ES2006/070069
(87) International publication number: WO 2006/128942

(57) **Abstract**

The invention relates to an electromechanical drive mechanism for motor vehicles with combustion engines. The invention is based on a series of elements which together are intended to serve as an electric power drive system for any vehicle in which the standard operating system thereof takes the form of a heat engine rather than an electric engine. According to the invention, the boot of the motor vehicle is equipped with two electric generators/engines (1) which extend into the wheel cavities, such that the mechanical drive system acts on said wheels which incorporate a rack or ring (11) on the inner part of the rim of the vehicle (12).

## Description

### object of the Invention

The present invention patent relates to an electromechanical drive mechanism for motor vehicles with combustion engines, and the object thereof is to present a possibility of converting a conventional motor vehicle into a hybrid and electric vehicle.

### Background of the Invention

Up until now there have been a series of hybrid systems for motor vehicles which are based on different types of combinations which are applied to motor vehicles in the same manufacturing stage; nevertheless they have a series of problems with regard to the electromechanical drive mechanism for motor vehicles with combustion engines, object of the present invention patent. For example the following can be mentioned:

Patent application US 2004124023 A1 describes a motorized vehicle containing a distributed engine system, having a plurality of electric motors each coupled to a respective traction wheel as well as the steerable wheels, all under the system of a controller. According to the applicant, the manufacture of this system has a serious problem from the technological point of view; it involves installing said system in a vehicle in its manufacturing stage, the latter being fixed. The system described in said patent differs in several essential parts of the system described below; furthermore the present patent relates to mass produced motor vehicles with an already working combustion engine, whereas said patent relates to a system of converting energy into electrical power by means of a turbine, and starts from an initial design of a mass produced vehicle; it further relates to a rigid drive system with no damper system whatsoever and always integrally and permanently meshes with the wheels of the vehicle, which is unfeasible for a motor vehicle. Meanwhile the drive system described herein incorporates a drive shaft that is neither rigid nor permanent. In relation to the inner gear of the wheel, any wheel which moves by means of a pinion needs it, given that there are countless mechanisms with the same gears; the present patent does so in a different manner.

English patent GB 124186 A describes a drive shaft mechanism for motorized vehicles using large diameter wheels to transport very heavy loads. The transmission shaft starts from the differential of the rear axis through a fixed pinion, whereas the present patent solves said drive by means of an adjustable and oscillating system. The present patent relates to a system that can be assembled in already existing conventional vehicles and said patent relates to a standard system by means of which the vehicle would already incorporate it in a fixed manner.

English patent GB 364803 A describes improvements relating to the transmission of motorized vehicles to be able to universally adjust any interference between the gear box and the rear axle, therefore the difference in speed between both can be adjusted as required through two gears joined by a chain. The mentioned patent only relates to the transmission part of motorized vehicles, whereas the present patent relates to an electromechanical drive mechanism for motor vehicles with combustion engines including a group of devices providing a hybrid and electric system to any motor vehicle in which the standard operating system thereof takes the form of a heat engine.

Patent application US 2003092525 A1 describes a hybrid power system comprising a first power unit, a secondary shaft, a speed converter, a clutch, and an electric engine which, according to the possible operating circumstances, are connected to produce power. According to the applications, it only relates to the conversion of power by means of said hybrid system, unlike the present patent which relates to an electromechanical drive mechanism for motor vehicles with combustion engines.

In summary, it can be observed that there are different hybrid systems for converting energy as well as different types of mechanisms that are used in the field of mechanics, but at no time does the state of the art reflect any electromechanical drive mechanism for motor vehicles with combustion engines which allows converting a conventional motor vehicle into a hybrid and electric vehicle.

### Description of the Invention

To reduce or eliminate, where applied, all the drawbacks set forth above this new electromechanical drive mechanism for motor vehicles with combustion engines, object of the present invention patent, is presented, basically consisting of a possibility of converting an already manufactured mass produced motor vehicle with a combustion engine into a hybrid or electric vehicle.

With this new electromechanical drive mechanism for motor vehicles with combustion engines modifying the production systems of already existing motor vehicle manufacturers can be prevented, without having to change their assembly line since said mechanism can be incorporated into any mass produced vehicle after it has been manufactured.

Pollutant gas emissions are reduced and fuel is saved.

None of the mass produced parts of a vehicle need to be modified.

The noise from the combustion engine is significantly reduced since it works in three modes:
1. idling combustion engine with the electric engine operating.
2. combustion engine off and electric engine operating.
3. both driving at the same time.

This increases the safety of the vehicle incorporating said drive mechanism since the vehicle would also operate with four-wheel drive as it has two independent drive systems.

The two engines are located in the boot of the motor vehicle and extend into the wheel cavity such that the drive mechanism acts on said wheel, which allows maintaining the original vehicle design as all the elements forming the drive mechanism are housed therein.

The entire drive mechanism is dual since each one acts on each of the non-drive wheels of the original vehicle (with front-wheel drive), thus favoring the differential system on curves.

The electromechanical drive mechanism for motor vehicles with combustion engines, object of the present invention patent, is formed by an electric generator/engine acting as an engine when it is fed electric power and as a generator when the vehicle decelerates; it is anchored in a support with bearings on which it rotates, and the function is that when' power is applied the armature rotates with its shaft in one direction, whereas due to the effect of the opposite torque moment, the stator rotates in the opposite direction. This latter movement is what actuates the mechanical drive system with force in one direction or the other until the pinion comes up against the inner ring or rack since the system is coupled to the stator.

The drive shaft meshes with an input shaft which is integral with the counter shaft by means of the toothed belt; the lower part of the mechanical drive system slides inside the intermediate part of the mechanical drive system in correspondence with the vertical oscillations of the rim of the vehicle due to the uneven terrain, maintaining the drive at all times, said intermediate part can in turn be regulated in length inside the upper part of the mechanical drive system by means of four clamping screws as needed in order to be able to adapt to any distance from the drive shaft to the inner rack or ring incorporated on the rim of the vehicle, thus making it more versatile.

Tension devices are responsible for adjusting the tension that the toothed belt can have in the loose side at that time, and for serving as a damper for the lower part of the mechanical drive system containing the counter shaft having a pinion at its end acting on the inner rack or ring incorporated on the rim of the wheel of the vehicle.

The regulating idler roller coupled at a suitable distance from the pinion slides in the rear circular groove of the inner rack or ring incorporated on the rim of the wheel of the vehicle and its function is to prevent the pinion from rubbing against the inner rack or ring when the rim oscillates due to the uneven terrain when both of them are not driving or is in the neutral position.

When the opposite torque moment makes the mechanical drive system rotate to one side or the other, the pinion drives the inner rack or ring.

Another different form of action in order to be able to regulate the distance between the pinion and the inner rack or ring is to actuate the roller in the longitudinal direction by means of a small motor through a screw, which incorporates the fastening of the roller in the rear area of the lower part of the mechanical drive system.

### Description of the Drawings

To complement the description being made and for the purpose of aiding to better understand the features of the invention, a series of figures is attached to this specification as an integral part thereof in which the following is shown with an illustrative and non-limiting character:

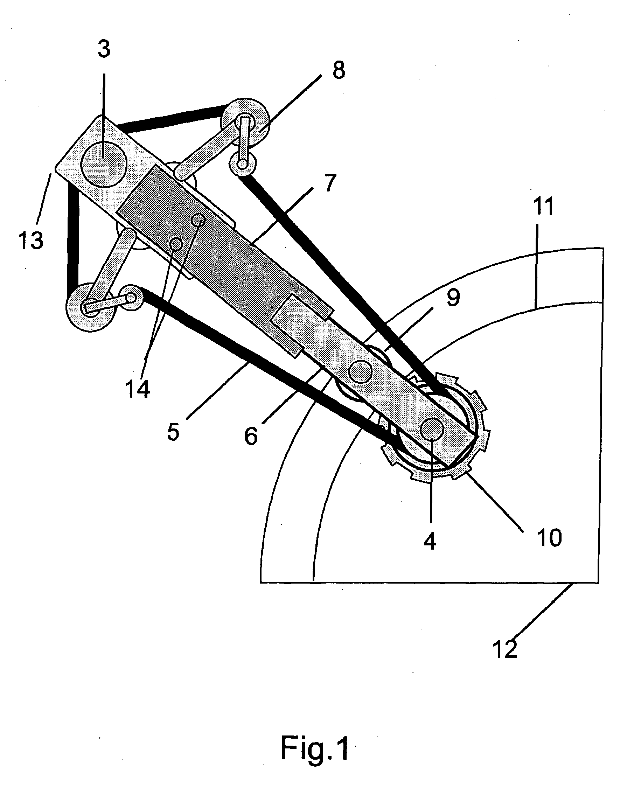

Figure 1 shows a side view of the mechanical drive system with a fixed roller.

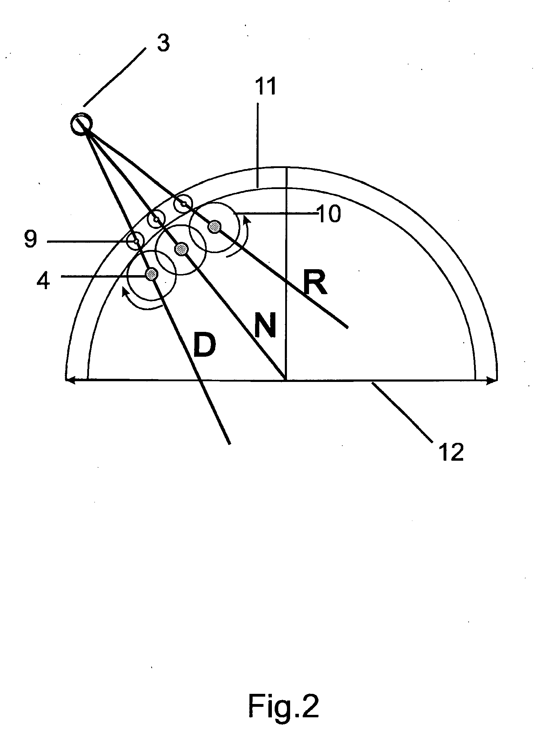

Figure 2 shows a graphical representation of the different possible positions of the mechanical drive system.

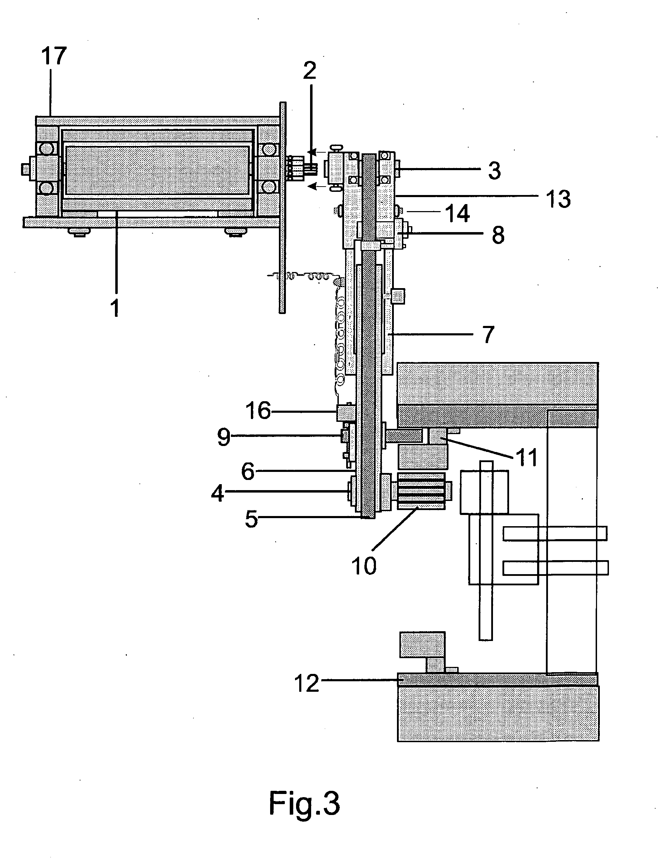

Figure 3 shows an elevational view of the electromechanical drive mechanism in which the wheel of the vehicle, electric generator/engine and mechanical drive system can be seen.

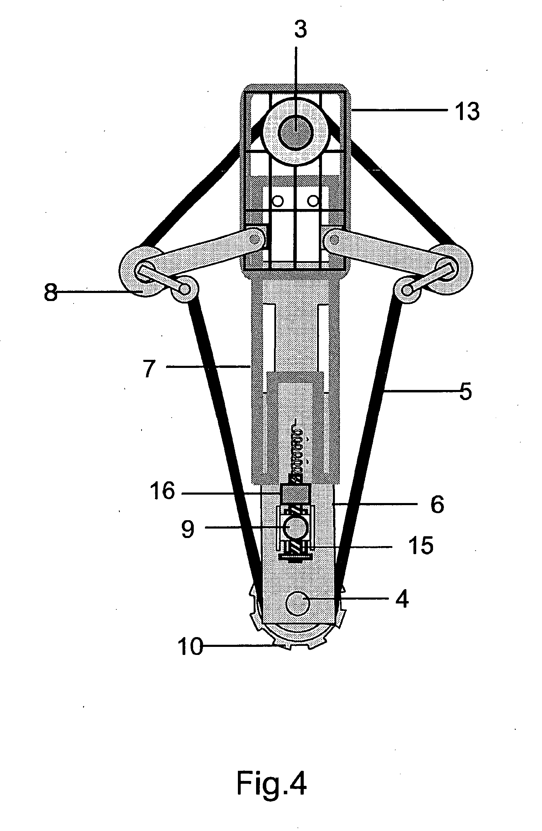

Figure 4 shows a side view of the mechanical drive system with electric actuation of the roller.

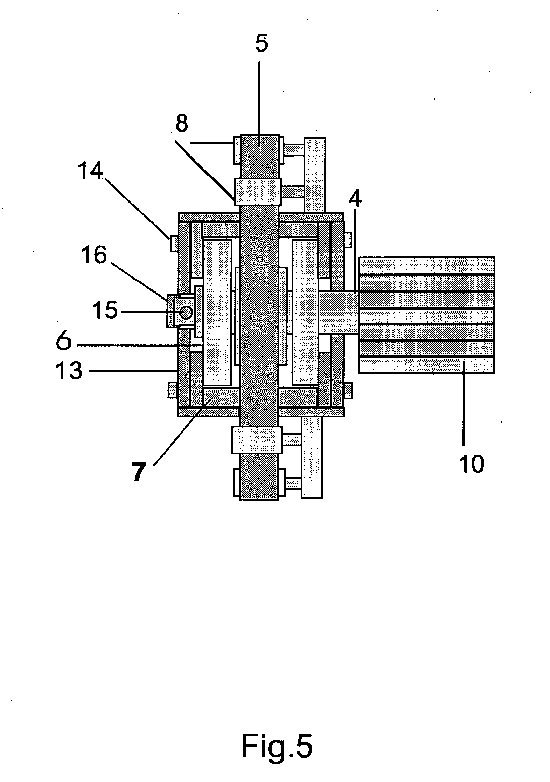

Figure 5 shows an elevational view of the electromechanical drive mechanism, with electric actuation of the roller.

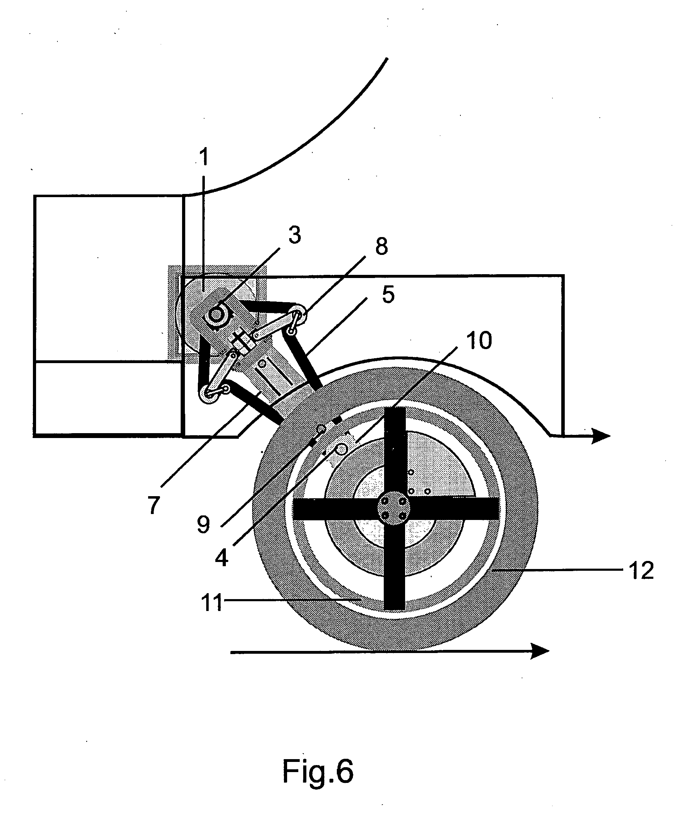

Figure 6 shows a detailed view of an example of the application in a conventional motor vehicle with a combustion engine.

### Preferred Embodiment of the Invention

As can be seen in the attached drawings, the electromechanical drive mechanism for motor vehicles with combustion engines, object of the present invention patent, is formed by an electric generator/engine (1) acting as an engine when it is fed electric power, and as a generator when the vehicle decelerates; it is anchored in a support (17) with bearings on which it rotates, and the function is that when power is applied the armature rotates with its shaft (2) in one direction, whereas due to the effect of the opposite torque moment, the stator rotates in the opposite direction. This latter movement is what actuates the mechanical drive system with force in one direction or the other until the pinion comes against the inner rack or ring (11), since the system is coupled to the stator. The drive shaft (2) meshes with the input shaft (3), which is integrally joined to the counter shaft (4) by means of the toothed belt (5); the lower part (6) of the mechanical drive system slides inside the intermediate part (7) of the mechanical drive system, in correspondence with the vertical oscillations of the rim (12) of the vehicle due to the uneven terrain, maintaining the drive at all times, said intermediate part can in turn be regulated in length inside the upper part (13) of the mechanical drive system by means of four clamping screws (14) as needed in order to be able to adapt to any distance from the drive shaft (2) to the inner rack or ring (11) incorporated on the rim (12) of the vehicle. Tension devices (8) are responsible for adjusting the tension that the toothed belt (5) may have on the loose side at that time, and serving as a damper for the lower part (6) of the mechanical drive system containing the counter shaft (4) having a pinion (10) at its end acting on the inner rack or ring (11) incorporated on the rim (12) of the wheel of the vehicle. The regulating idler roller (9) coupled at a suitable distance from the pinion (10) slides in the rear circular groove of the inner rack or ring (11) incorporated on the rim (12) of the vehicle; its function is to prevent the pinion (10) from rubbing against the inner rack or ring (11) when the rim oscillates due to the uneven terrain, when both are not driving, or is in the neutral position (N); when the opposite torque moment makes the mechanical drive system rotate to one side (D) or the other (R), the pinion (10) drives the inner rack or ring (11).

Another different form of action in order to be able to regulate the distance between the pinion and the inner rack or ring (11) is to actuate the roller (9) in the longitudinal direction by means of a small motor (16) through a screw, which incorporates the fastening of the roller (9) in the rear area of the lower part (6) of the mechanical drive system.

Having sufficiently described the nature of the present invention as well as a way of carrying it out to practice, all that is left to be added is that said invention can undergo certain variations in terms of shape and materials provided that said alterations do not substantially vary the features claimed below.

## Claims

1. An electromechanical drive mechanism for motor vehicles with combustion engines, **characterized by** having two electric generators/engines (1) rotating on a support (17) with the opposite torque moment joined to the body in the boot of the vehicle, the drive shaft (2) of which meshes with the input shaft (3) which is integrally joined to the upper part (13) of the mechanical drive system of the mechanism and in turn to the counter shaft (4) by means of the toothed belt (5); the lower part (6) of the mechanical drive system slides inside the intermediate part (7) of the mechanical drive system and said intermediate part is in turn manually adjusted inside the upper part (13) of the mechanical drive system to adapt the distance from the drive shaft (2) to the inner rack or ring (11) of the rim (12) of the vehicle; tension devices (8) adjust the tension of the loose side of the toothed belt (5) and dampen the lower part (6) of the mechanical drive system containing the counter shaft (4) incorporating a pinion (10) at its end acting on the inner rack or ring (11) incorporated in the rim (12) of the vehicle; the idler roller (9) coupled together with the pinion (10) slides in the rear circular groove of the inner rack or ring (11).

2. An electromechanical drive mechanism for motor vehicles with combustion engines according to claim 1, **characterized in that** it consists of three parts: the fixed upper part (13) of the mechanical drive system; the adjustable intermediate part (7) of the mechanical drive system; the sliding lower part (6) of the mechanical drive system regulated by the force of tension devices (8).

3. An electromechanical drive mechanism for motor vehicles with combustion engines according to claim 1, **characterized in that** the lower part (6) of the mechanical drive system of the mechanism incorporates a pinion (10) acting on the inner rack or ring (11) of the rim (12) of the vehicle and an idler roller (9), which can be fixed or mobile, actuated by a small motor (16).

4. An electromechanical drive mechanism for motor vehicles with combustion engines according to claim 1, **characterized in that** the stator of the engine (1) uses the opposite torque moment to move the drive mechanism to both sides.

5. An electromechanical drive mechanism for motor vehicles with combustion engines according to claim 1, **characterized in that** the rim (12) of the vehicle incorporates an inner rack or ring (11) that is active on both sides on which the idler roller (9) slides and the pinion (10) acts.
